# EUROPEAN PATENT APPLICATION

(11) **EP 0 894 657 A2**
(43) Date of publication of application: **03.02.1999**
(21) Application number: 98305961.9
(22) Date of filing: 27.07.1998
(51) Int. Cl.: B60K 5/00, B60K 17/00

(54) **Modified engine and transmission installation in citroen 2CV motor cars and variants thereof**

(30) Priority: 29.07.1997 GB 9715911
(71) Applicant: Griffith, Frederick John, Denbigh, North Wales LL16 5AB (GB)
(72) Inventor: Griffith, Frederick John, Denbigh, North Wales LL16 5AB (GB)

(57) **Abstract**

With reference to Figs 4 and 5, the combined engine/clutch/gearbox unit 1 of a Citroen 2CV is removed from its normal position and is repositioned behind the centre line of the front wheels and is turned back-to-front so the gearbox faces forward. A front wheel differential carrier 6 is installed between the front wheels utilising a 2CV gearbox casing to locate and support a differential unit, inboard hubs, brakedrums 2 and inboard ends of front wheel driveshafts. The power unit 1 and differential carrier 6 are rigidly attached to each other by a common mounting bracket 7 incorporating means of chain tension adjustment and are flexibly mounted on the chassis. The rotational direction of the differential in the gearbox portion of the power unit 1 is reversed by repositioning the crownwheel so as to engage with the opposite side of the gearbox output shaft pinion. Drive from the power unit 1 is transferred to the front wheel drive shafts by chainwheels 5 bolted to the four brakedrums 2 and chains 4. The vehicle controls and engine air cooling system are modified to suit.

## Description

The invention relates to the re-positioning of the combined engine/clutch/gearbox unit in Citroen 2CV motor car chasses and variants thereof which use two or four cylinder horizontally opposed engines.

Citroen 2CVs and variants thereof i.e. Dyanes and Amis are all front wheel drive and were made in large numbers over many years. Because of the ready availability, simplicity and cheapness of secondhand and scrapped 2CVs and spares they have the potential to become widely used as 'donor' cars for the kit-car industry or as a basis for specials. In fact very few kit-car designs based on the 2CV chassis are actually available.

One reason for this could be that in the conventional 2CV layout the combined engine/clutch/gearbox unit - hereinafter referred to as the 'power unit' - projects well forwards of the front wheels thus severely limiting the design of bodywork which can be fitted and making the production of a convincing or attractive replica of a pre-war style car impossible.

The purpose of this invention is to provide a mechanically simple, reliable and inexpensive method of re-positioning the power unit in the chassis in such a way that it retains the front wheel drive whilst also being covered by a bonnet which extends only as far forwards as the centre line of the front wheels or thereabouts according to choice.

This would make it possible to construct a kit-car or special based on a 2CV or variant chassis with a much more accurate and realistic traditional pre-war style body than could otherwise be done in the absence of the modifications proposed by this invention, thus making the private or commercial production of 2CV based kit-cars or specials a more attractive and profitable proposition.

Details of standard 2CV construction may be obtained from any 2CV manual or handbook and unless otherwise stated all parts used in this invention are taken from 2CV cars.

From the methods proposed by this invention it will be seen that only chasses or power units fitted with drum brake braking systems will be suitable for modification thus any later model 2CV or variant fitted with disc brakes will have to be changed to brakedrum braking systems in order to be modified using the methods of this invention.

To illustrate the principle and methods of this invention the following drawings are included in this application.

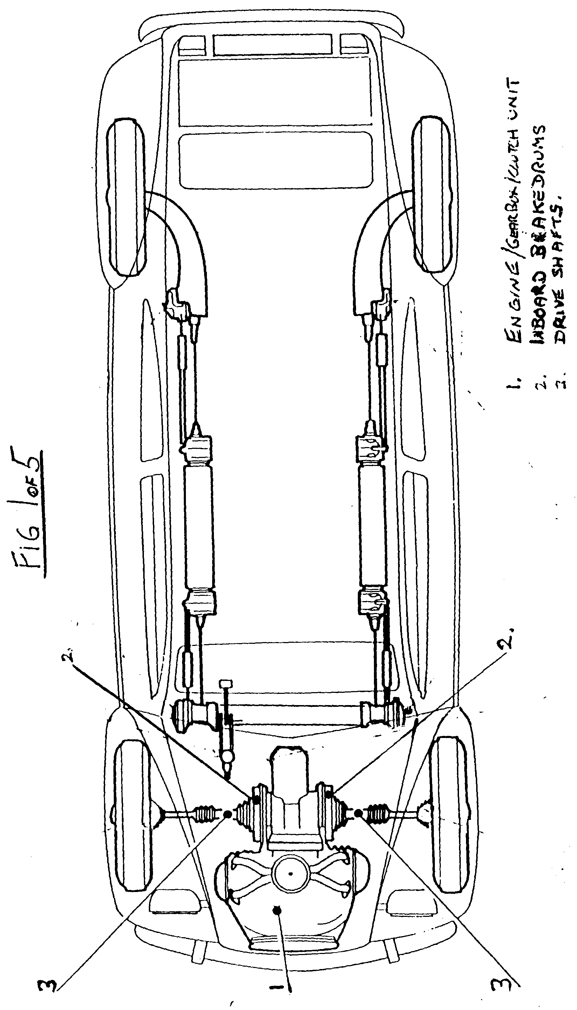

Fig 1 shows the plan view of a 2CV with the engine/clutch/gearbox unit and front wheel drive shafts in the conventional position.

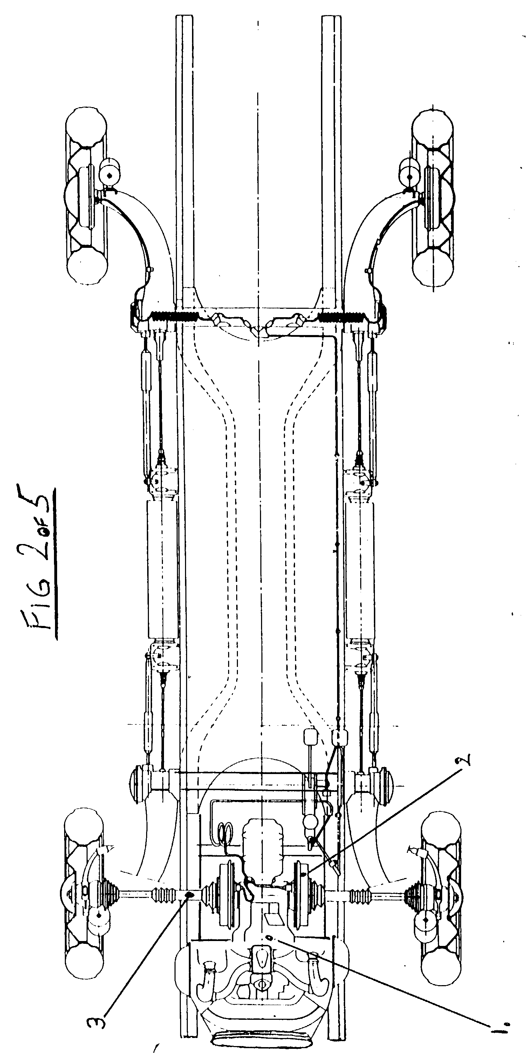

Fig 2 shows the plan view of a 2CV chassis with the engine/clutch/gearbox unit and front wheel driveshafts in the conventional position.

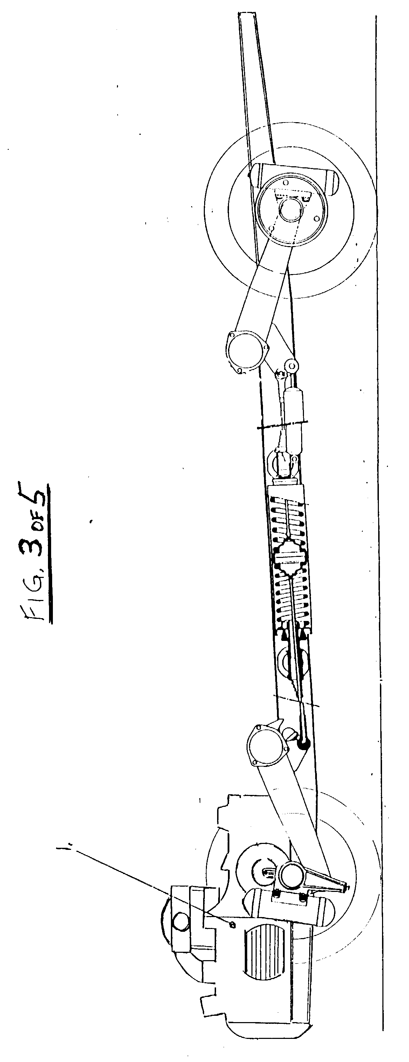

Fig 3 shows the side view of a 2CV chassis with the engine/clutch/gearbox unit in the conventional position.

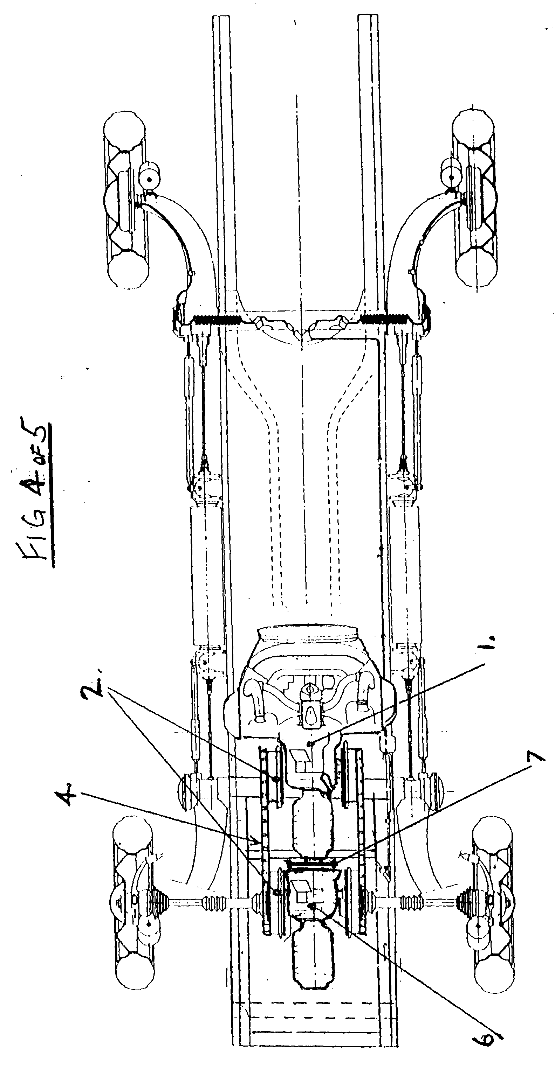

Fig 4 shows the plan view of a 2CV chassis modified as proposed in this invention.

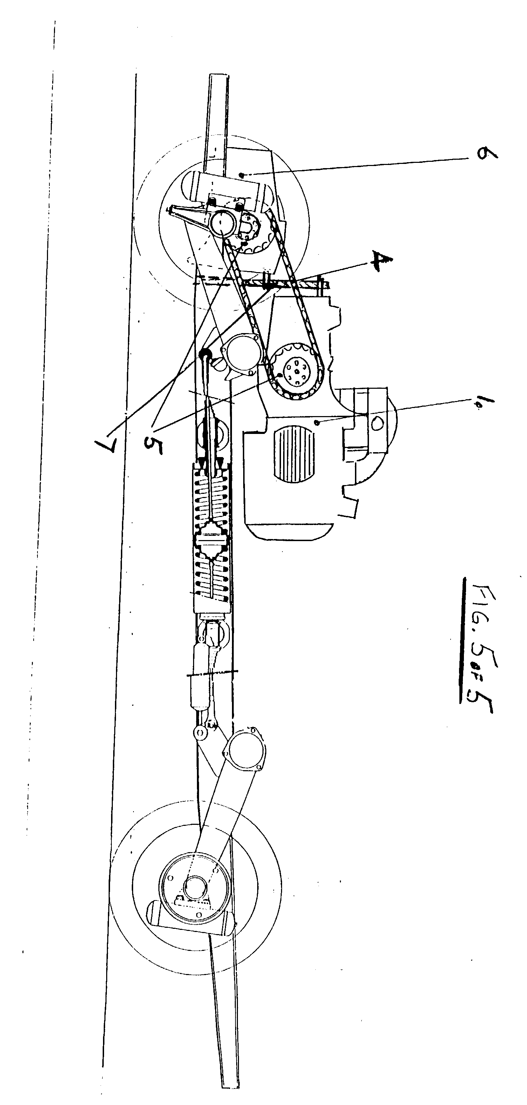

Fig 5 shows the side view of a 2CV chassis modified as proposed in this invention.

Referring to the drawings, the power unit 1 is removed from its conventional position forward of the front wheels and is re-installed further back in the chassis and turned back-to-front.

A stripped out gearbox casing and clutch housing 6 is positioned between the front road wheels to locate and support a differential unit, inboard hubs and brakedrums and the inboard ends of the front wheel driveshafts. This stripped-out gearbox casing and clutch housing-hereinafter referred to as the 'differential carrier' - may be used upright or inverted, or turned back to front, or cut down and reduced in size as desired. Alternatively a purpose made differential carrier may be used.

The repositioned and back-to-front power unit 1 is rigidly connected to the differential carrier 6 by means of a purpose made common mounting bracket 7 mounted on the chassis. Although rigidly connected together, the power unit 1 and the differential carrier 6 are both flexibly mounted on the chassis, as is the common mounting bracket 7 which connects them.

The crownwheel and the differential unit inside the gearbox section of the power unit are removed, turned though 180 degrees laterally and re-installed so that the crownwheel gearteeth now engage with the opposite side of the gearbox output shaft pinion.

This reverses the direction of rotation of the crownwheel in any selected gear and hence the inboard hubs and brakedrums connected to it. This is essential as otherwise the back-to-front power unit would provide the vehicle with one forward gear and four reverse gears. With the reversed crownwheel and consequent reversed rotational direction of the inboard hubs and brakedrums the vehicle has four forward gears and one reverse gear.

The motive power is transferred from the power unit 1 to the differential carrier 6 by means of purpose-made chainwheels 5 and chains 4. These chainwheels are bolted to the outer faces of the brakedrums 2 on the power unit and to the outer faces of the brakedrums 2 on the differential carrier between the brakedrums and the inboard ends of the driveshafts.

In all cases the existing boltholes in the driveshaft flanges, brakedrums and inboard hubs are utilised, the chainwheels being drilled to correspond.

The chainwheels are manufactured to a suitable diameter and tooth pitch to accomplish their function utilising standard dimension motor-cycle chains or similar.

A feature of this invention is that by using chainwheels of a different diameter on the differential carrier than those on the power unit a further alteration of the transmission gearing in addition to that provided by the gearbox/differential is obtained thus effectively varying the gear ratios. In view of the likely overall reduced weight of the completed kit-car or special as compared to the original 2CV saloon and also reduced wind resistance of a lower and narrower body, a higher maximum road speed and more economical fuel consumption may be obtained by raising the overall gearing ratio by means of using smaller diameter chainwheels on the frontwheel differential carrier.

## Claims

1. A method of re-positioning the combined engine and transmission unit (the power unit) of a Citroen 2CV or variants thereof whether powered by two or four cylinder horizontally opposed engines and providing front wheel drive in such a manner that the power unit lies behind the centre line of the front wheels with drive to the front wheel driveshafts being transmitted by chains and chainwheels.

2. A method as claimed in Claim 1 whereby the re-sited power unit is installed back-to-front with the gearbox towards the forward end of the chassis.

3. A method as claimed in Claim 1 or 2 and only when the power unit is installed back-to-front and providing motive power to the front wheels whereby the crownwheel and differential inside the power unit gearbox are turned through 180 degrees laterally so that when re-installed the crownwheel gearteeth engage with the opposite side of the gearbox output shaft pinion. This reverses the rotational direction of the differential in any selected gear relative to its rotational direction in a conventional and unaltered 2CV gearbox.

4. A method as claimed in any preceding claim whereby the front wheel drive shafts, rafter the power unit has been removed and repositioned, are connected by a differential unit, inboard hubs, and brakedrums all supported and carried in a stripped-out gearbox casing and clutch housing rigidly connected to the power unit by a common mounting bracket.

5. A method as claimed in Claim 4 whereby the stripped-out gearbox is sealed so as to contain oil which is agitated by the crownwheel attached to the differential unit to provide splash lubrication of the differential and hub bearings.

6. A method as claimed in any preceding claim whereby purpose-made chainwheels are bolted to the outer faces of the brakedrums attached to the power unit and are also interposed between the outer faces of the differential carrier brakedrums and the inboard ends of the front wheel driveshafts to utilise standard motor-cycle chains or similar to transfer motive power to the front wheel driveshafts.

7. A method as claimed in any preceding claim whereby drivechain tension may be maintained or adjusted by means of altering the distance between the differential carrier and the power unit utilising either screw-threaded rods and locknuts or spacer shims on the common mounting bracket between the differential carrier and the power unit.

8. A method as claimed in Claim 7 above whereby the power unit is bolted to the chassis on a flexible mounting incorporating slotted bolt holes to permit sufficient fore and aft and lateral movement of the power unit to allow a correct and equal chain tension to be set on both driving chains when adjusting the chain tension by the means specified in Claim 7.

9. A method as claimed in any preceding claim whereby the installation of different diameter chainwheels on the differential carrier in relation to those bolted to the power unit brakedrums may be used to vary the overall gearing ratio between the engine crankshaft and the front roadwheel driveshafts.

10. A method of re-siting the power unit on a 2CV chassis and providing front wheel drive substantially as described herein with reference to Figures 1 - 5 of the accompanying drawings.
